# FASCICULE DE BREVET EUROPEEN

(11) **EP 2 605 350 B1**
(45) Date de publication et mention de la délivrance du brevet: **05.08.2015**
(21) Numéro de dépôt: 11306667.4
(22) Date de dépôt: 15.12.2011
(51) Int. Cl.: H02G 3/04, H02G 3/06

(54) **Système de verrouillage de deux tronçons de chemin de câbles**
Verriegelungssystem von zwei Abschnitten eines Kabelkanals
System for locking two sections of a cable raceway

(43) Date de publication de la demande: 19.06.2013
(73) Titulaire: Niedax France, 62400 Bethune (FR)
(72) Inventeur: Rousselle, Denis, 62400 Bethune (FR); Penichon, Mickael, 62400 Bethune (FR); Delforge, David, 62400 Bethune (FR)
(74) Mandataire: Louiset, Raphael

(56) Documents cités:
- EP-A1- 0 695 009
- EP-A1- 1 249 653
- EP-A2- 2 280 463
- DE-U1-202008 009 852
- FR-A1- 2 848 350

## Description

L'invention a trait au domaine des chemins de câbles, et plus particulièrement à l'assemblage de tronçons de chemins de câbles télescopiques par verrouillage.

Les chemins de câbles sont des structures permettant de supporter aussi bien dans une configuration horizontale que verticale des éléments tels que des câbles électriques, des câbles téléphoniques, des fibres optiques, des câbles de réseau informatique ou encore des tuyaux de canalisation.

Un chemin de câbles présente généralement un fond et deux ailes latérales, formant une section en U, ou en C. On connaît également des chemins de câbles de section en G, comme présentés dans le document WO 2007 068 813.

Il existe différents types de chemins de câbles, dont les plus courants sont :
- le type treillis de fils : le chemin de câbles est formé d'un maillage de fils de trame transversaux et de fils de chaîne longitudinaux ;
- le type tôle : le chemin de câbles est formé à partir d'une tablette métallique pleine repliée pour former le fond et les ailes ;
- le type tôle perforée : la tablette du chemin de câbles comporte des ouvertures réparties régulièrement, généralement de forme oblongue.

Le chemin de câbles peut subir un traitement, tel que la pose d'un revêtement, le zingage ou encore la galvanisation à chaud, de manière à rendre le chemin de câbles résistant à son environnement, présentant une atmosphère éventuellement agressive, dans lequel il est placé.

Les éléments à supporter sont placés sur le fond du chemin de câbles, un couvercle pouvant être fixé pour fermer le chemin de câbles et protéger ainsi les éléments. D'autres accessoires peuvent être disposés dans le chemin de câbles, par exemple un collier enserrant les éléments pour les maintenir contre le fond ou contre une aile, ou encore une cornière de séparation permettant de séparer physiquement les éléments.

Un chemin de câbles est généralement formé de plusieurs tronçons, conventionnellement de trois mètres de long, aboutés, et fixés les uns aux autres, de manière à définir la trajectoire du chemin de câbles. Des éléments de raccordement coudés permettent d'obtenir une trajectoire courbe, comme les éléments décrits dans le document EP 0 521 536 ou le document EP 0 315 023. Les tronçons de chemins de câbles sont fixés sur un support appelé bras de console, lui-même fixé à un pendard vertical ou horizontal, ou directement sur une paroi ou un plafond.

Le montage d'un chemin de câbles se fait en général à l'avancement, chaque tronçon étant assemblé sur le précédent et ainsi de suite.

La manière actuelle la plus répandue d'assemblage des tronçons de chemins de câbles est celle mettant en oeuvre un élément d'assemblage appelé éclisse. Une éclisse se présente généralement sous la forme d'une pièce allongée, fixée à cheval sur deux tronçons aboutés.

Ainsi, l'assemblage des tronçons est-elle une étape délicate du montage des chemins de câbles, car un opérateur doit manipuler à la fois deux tronçons, l'éclisse et les outils pour l'assemblage.

On connaît différents moyens de fixer l'éclisse sur les deux tronçons, par exemple par boulonnage comme dans le document EP 0 617 493 ou encore le soudage. Toutefois, le boulonnage impose d'utiliser de nombreuses pièces supplémentaires de visserie, tandis que le soudage demande de la part d'un opérateur de mettre en oeuvre des compétences et un appareillage propres au domaine des soudures, et risque par ailleurs de détériorer le revêtement des chemins de câbles.

Afin de tenter de s'affranchir d'outils, il est également connu de monter l'éclisse par forçage au moyen de pattes déformables, comme le montre le document FR 2 751 723, ou par encliquetage, dont un exemple est présenté dans le document FR 2 833 420. Bien que ces deux méthodes présentent l'avantage de ne pas employer de visserie, elles peuvent cependant entraîner une usure en fatigue prématurée, rendant la liaison entre les deux tronçons plus fragile, et donc le chemin de câbles moins fiable.

Le document EP 0 695 009 décrit une autre méthode de montage d'une éclisse dans laquelle l'éclisse comprend des pattes insérées dans les ouvertures des tronçons de chemins de câbles en tôle pliée, les pattes étant déformées afin de verrouiller l'ensemble. Le montage de l'éclisse s'avère toutefois fastidieux, car il requiert de manipuler l'éclisse tout en maintenant les deux tronçons dans la position adéquate. En outre, le montage de l'éclisse nécessite l'emploi d'un outil adapté ainsi qu'une certaine aptitude des opérateurs qui doivent s'assurer que l'éclisse est correctement montée et que le verrouillage est complet.

Afin d'offrir une facilité de montage, il a été proposé des éclisses pouvant prendre une position prémontée avant assemblage des tronçons, pour limiter le nombre d'étapes au montage du chemin de câbles.

Le document EP 1 061 623 présente un exemple d'éclisse pour goulotte, l'éclisse comprenant un élément formant came coopérant avec des encoches sur un premier tronçon afin de prendre une position rentrée dans le premier tronçon lors du stockage et une position sortie pour l'assemblage avec un deuxième tronçon.

L'éclisse décrite dans le document FR 2 833 420 peut également prendre une position prémontée par pivotement d'un fil d'un tronçon de chemins de câbles en treillis dans une encoche de l'éclisse.

Par ailleurs, afin de pouvoir stocker et transporter des chemins de câbles plus facilement, il a été proposé la mise en place de tronçons de chemins de câbles coulissant l'un sur l'autre de façon à prendre une position pliée plus compacte avant l'installation. Des moyens de verrouillage s'affranchissant de l'utilisation d'une éclisse ont été alors proposés.

Le document EP 1 257 030 de la demanderesse décrit un exemple de chemin de câbles formé de tronçons télescopiques. Les deux tronçons peuvent prendre une position compacte et une position déployée par coulissement de l'un sur l'autre. Des moyens de verrouillage des deux tronçons en position déployée sont prévus, par exemple sous forme de saillie sur un tronçon dont un bord coopère avec le bord d'une ouverture sur un autre tronçon.

Le document FR 2 848 350, également au nom de la demanderesse, propose un nouveau système d'assemblage de tronçons de chemins de câbles télescopiques, utilisant des ergots sur un tronçon mâle coopérant avec des lumières placées sur le tronçon femelle, afin de proposer à la fois une position d'éclissage et une position de verrouillage.

EP 2 280 463 A2 décrit une autre système de verrouillage de deux tronçons d'un chemin de câbles.

Ces solutions, bien qu'apportant de nombreux avantages, n'offrent cependant pas entière satisfaction, tant vis-à-vis de la facilité de la manipulation que de la qualité du verrouillage. En effet, les moyens de verrouillage se révèlent insuffisants notamment sous l'effet de contraintes dynamiques pouvant amener les tronçons à se désolidariser.

L'invention vise notamment à apporter une solution aux divers problèmes mentionnés ci-dessus.

Un premier objet de l'invention est de proposer un système de verrouillage de tronçons de chemins de câbles télescopiques permettant de créer entre les tronçons une liaison résistante à des contraintes dynamiques.

Un deuxième objet de l'invention est de proposer un système de verrouillage de tronçons de chemins de câbles aisément mis en oeuvre par un seul opérateur.

Un troisième objet de l'invention est de proposer un système de verrouillage de tronçons de chemins de câbles n'utilisant pas d'outils ni d'accessoires.

Un quatrième objet de l'invention est de proposer un système de verrouillage de tronçons de chemins de câbles intégré au chemin de câbles.

Un cinquième objet de l'invention est de proposer un système de verrouillage de tronçons de chemins de câbles particulièrement adapté à des tronçons télescopiques.

Un sixième objet de l'invention est de proposer un système de verrouillage de tronçon de chemins de câbles automatique.

A cet effet, l'invention propose selon un premier aspect un système de verrouillage de deux tronçons de chemin de câbles, le système définissant un axe de référence et comprenant une agrafe en saillie sur une paroi d'un premier tronçon, ladite agrafe présentant deux portions :
- une première portion, dite petite portion, définie entre deux bords de part et d'autre de l'axe de référence,
- une deuxième portion, dite grande portion, définie entre deux bords de part et d'autre de l'axe de référence, de sorte que de chaque côté de l'axe de référence, la distance entre le bord de la grande portion et l'axe de référence est supérieure à la distance entre du bord de la petite portion à l'axe de référence ;
   le système de verrouillage comprenant en outre une ouverture pratiquée dans une paroi du deuxième tronçon, ladite ouverture présentant deux portions :
- une première portion, dite petite portion, définie entre deux bords de part et d'autre de l'axe de référence, de sorte que de chaque côté de l'axe de référence, la distance entre le bord de la petite portion de l'ouverture et l'axe de référence d'une part est supérieure à la distance entre le bord de la petite portion de l'agrafe et l'axe de référence et d'autre part est inférieure à la distance entre le bord de la grande portion de l'agrafe et l'axe de référence ;
- une deuxième portion, dite grande portion, définie entre deux bords de part et d'autre de l'axe de référence, de sorte que de chaque côté de l'axe de référence, la distance entre le bord de la grande portion et l'axe de référence est supérieure à la distance entre le bord de la grande portion de l'agrafe et l'axe de référence;
- le premier tronçon comprend, en outre, une languette de blocage en saillie sur la paroi du premier tronçon et dans lequel le deuxième tronçon comprend une fenêtre pratiquée dans la paroi du deuxième tronçon.

Le système de verrouillage ainsi réalisé permet à un seul opérateur de verrouiller automatiquement dans la direction de glissement, les deux tronçons de chemins de câbles l'un sur l'autre, par un simple mouvement de translation par exemple du premier tronçon sur le deuxième, de sorte que l'agrafe se loge dans l'ouverture, les dimensions de l'ouverture et de l'agrafe étant telles que la grande portion de l'agrafe peut coincer la paroi du deuxième tronçon contre la paroi du deuxième.

Avantageusement, l'agrafe comprend une portion intermédiaire déformable élastiquement, formée de deux segments inclinés par rapport à la paroi du premier tronçon et reliés entre eux par un congé, ledit congé définissant avec la paroi du premier tronçon une distance inférieure ou égale à l'épaisseur de la paroi du deuxième tronçon.

Selon un mode de réalisation, les bords de l'agrafe sont équidistants de l'axe de référence, facilitant la fabrication de l'agrafe.

Les bords de l'agrafe peuvent de plus être parallèles à l'axe de référence, également pour des considérations de fabrication.

De préférence, l'agrafe définit une distance avec la paroi du premier tronçon sensiblement égale à l'épaisseur de la paroi du deuxième tronçon, de sorte que l'agrafe vient en appui contre la paroi du deuxième tronçon pour la plaquer contre la paroi du premier tronçon.

Selon un mode de réalisation, l'agrafe présente une première section inclinée s'éloignant de la paroi du premier tronçon, une section intermédiaire définissant une distance avec la paroi du premier tronçon sensiblement égale à l'épaisseur du fond du grand tronçon, de manière à plaquer la paroi du deuxième tronçon contre la paroi du premier tronçon.

Selon un autre mode de réalisation, la section intermédiaire de l'agrafe comprend deux segments inclinés par rapport à la paroi du premier tronçon, la jonction entre les deux segments définissant une distance sensiblement égale à l'épaisseur du fond du grand tronçon. L'agrafe peut alors se déformer plus facilement.

Ainsi, de préférence, l'agrafe présente-t-elle successivement :
- une première section inclinée s'écartant de la paroi du premier tronçon,
- un premier congé prolongeant la première section,
- un premier segment de la section intermédiaire qui, partant du premier congé, se rapproche de la paroi du premier tronçon,
- un deuxième congé prolongeant le premier segment de la section intermédiaire,
- un deuxième segment de la portion intermédiaire qui, partant du deuxième congé, s'éloigne de la paroi du premier tronçon
- un troisième congé prolongeant le deuxième segment de la portion intermédiaire,
- une deuxième section inclinée rejoignant la paroi du premier tronçon.

L'agrafe présentant une telle forme présente un bon compromis entre rigidité et déformabilité.

Dès lors, en insérant la languette de blocage dans la fenêtre par glissement relatif des tronçons, les deux tronçons sont verrouillés dans la direction opposée à celle du glissement.

Selon un deuxième aspect, l'invention propose un chemin de câbles comprenant deux tronçons, muni d'un système de verrouillage tel que décrit, offrant ainsi un chemin de câbles simple à mettre en place, sans outils, par un seul opérateur.

Avantageusement, les tronçons du chemin de câbles sont télescopiques, et comprennent de moyens de guidage du glissement du premier tronçon sur le deuxième tronçon, facilitant le glissement et par là même le verrouillage des deux tronçons.

D'autres objets et avantages de l'invention apparaîtront à la lumière de la description faite ci-après en référence aux dessins annexés dans lesquels :
- la figure 1 est une vue en perspective d'un chemin de câbles comprenant une paire de tronçons de chemin de câbles télescopiques dans une position repliée ;

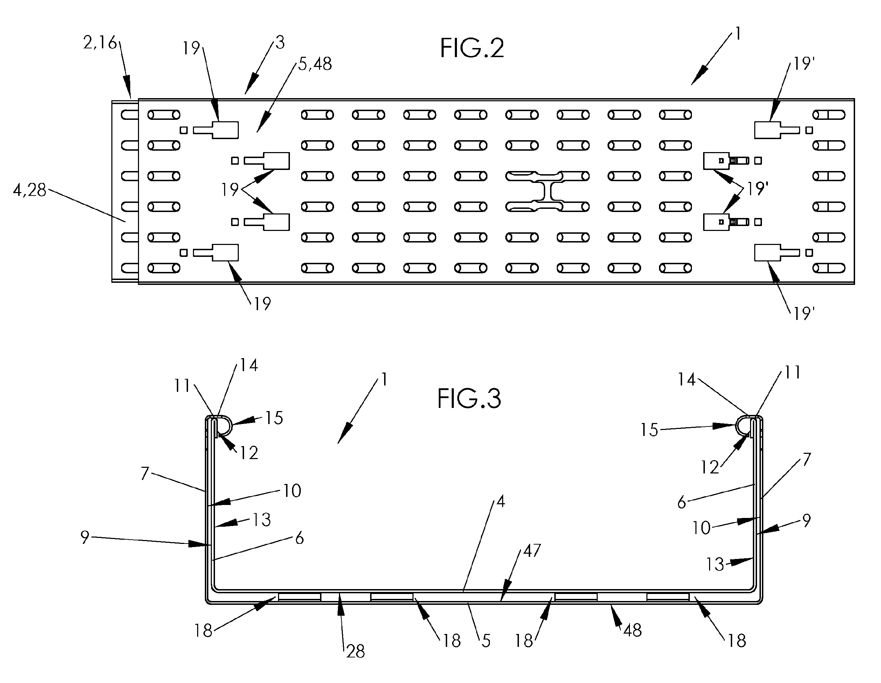

- la figure 2 est une vue de dessous des tronçons de chemins de câbles de la figure 1 ;
- la figure 3 est une vue de face des tronçons de chemins de câbles de la figure 1 ;

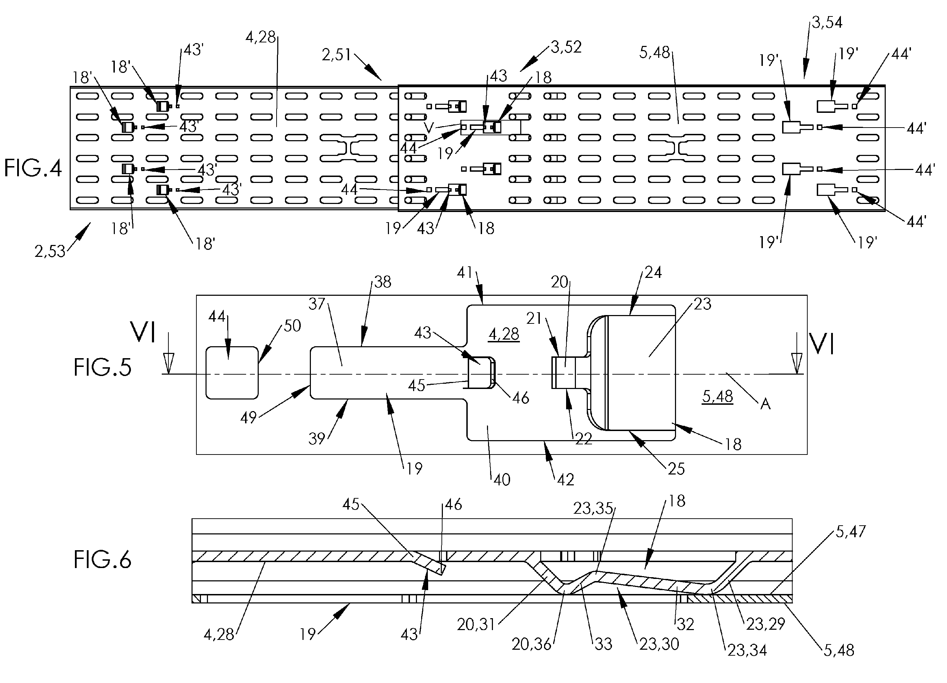

- la figure 4 est une vue de dessous des tronçons de chemins de câbles dans une première position intermédiaire de déploiement ;
- la figure 5 est une vue de détail de la figure 4 ;
- la figure 6 est une vue en coupe de la figure 5 suivant l'axe VI-VI ;

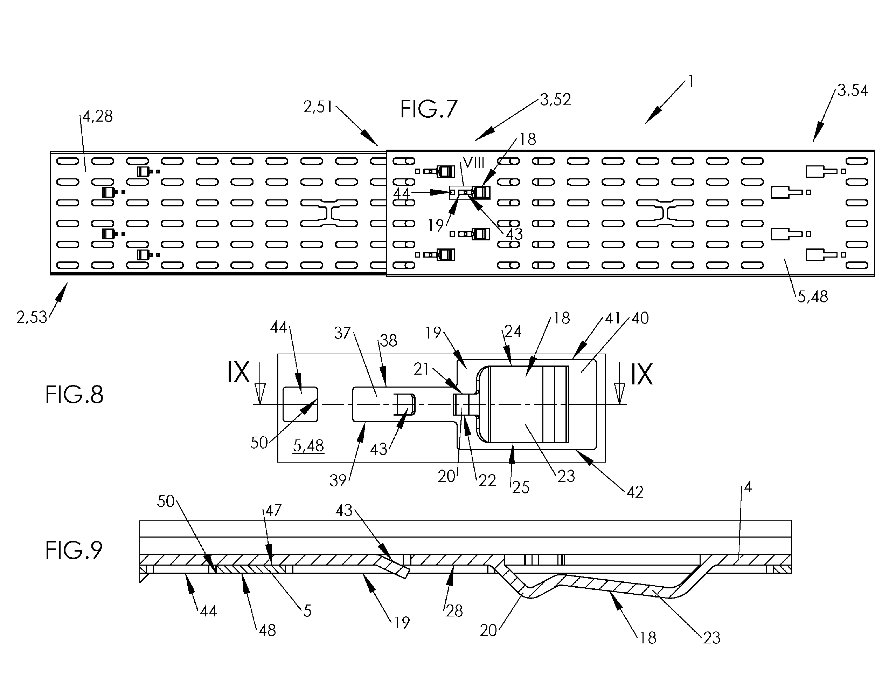

- la figure 7 est une vue de dessous des tronçons de chemins de câbles dans une position deuxième position intermédiaire de déploiement ;
- la figure 8 est une vue de détail de la figure 7 ;
- la figure 9 est une vue en coupe de la figure 7 suivant l'axe IX-IX ;
- la figure 10 est une vue de dessous des tronçons de chemins de câbles dans une position troisième position intermédiaire de déploiement ;
- la figure 11 est une vue de détail de la figure 10 ;
- la figure 12 est une vue en coupe de la figure 11 suivant l'axe XII-XII ;
- la figure 13 est une vue de dessous des tronçons de chemins de câbles dans une position finale déployée ;
- la figure 14 est une vue de détail de la figure 13 ;
- la figure 15 est une vue en coupe de la figure 14 suivant l'axe XV-XV ;
- la figure 16 est une vue en perspective des tronçons de chemins de câbles dans la position finale déployée ;
- les figures 17 à 20 représentent quatre exemples de forme d'agrafe pour verrouiller les tronçons de chemins de câbles ;
- les figures 21 à 23 représentent l'assemblage d'une deuxième paire de tronçons sur la paire de tronçons de la figure 16, dans trois étapes d'assemblage.

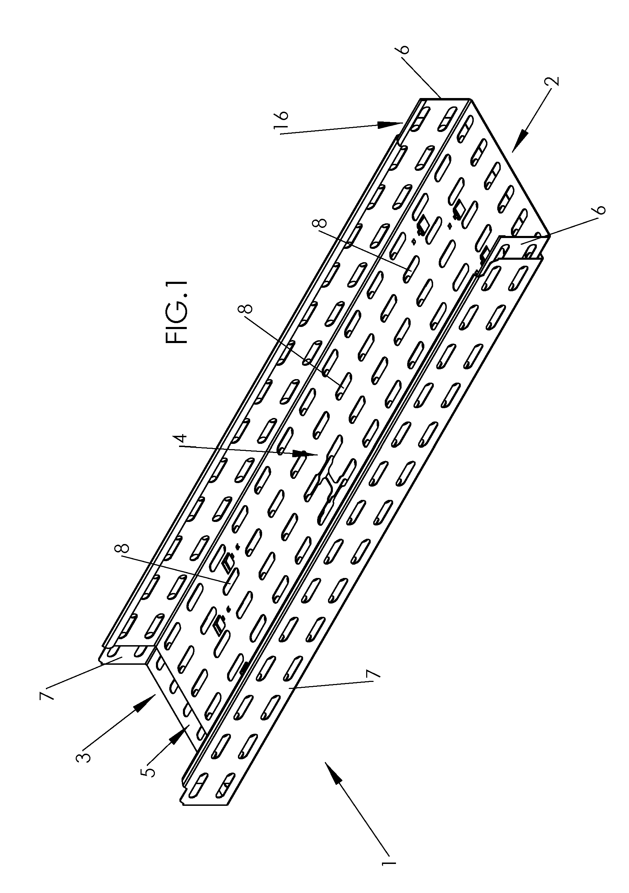

Sur la figure 1 est représenté un chemin 1 de câbles dans une position pliée.

Le chemin 1 de câbles représenté comprend une paire de tronçons 2, 3 télescopiques, étant entendu que le chemin 1 de câbles peut être formé d'une pluralité de tronçons de chemins 1 de câbles.

Chaque tronçon 2, 3 du chemin 1 de câbles est réalisé à partir d'une tablette métallique pleine, d'épaisseur de quelques centaines de microns. La tablette est pliée pour obtenir un profil en U, présentant un fond 4, 5 et deux ailes 6, 7 latérales s'étendant sensiblement à 90° à partir du fond 4, 5. Ainsi, les tronçons 2, 3 définissent entre leurs ailes 6, 7 un milieu intérieur ouvert dans lequel peuvent être placés des câbles.

Dans ce qui suit, on définit la direction longitudinale comme étant la direction d'extension du chemin 1 de câbles. La longueur désignera alors toute dimension mesurée selon la direction longitudinale. La direction verticale sera prise comme étant la direction perpendiculaire au fond 4, 5 des tronçons de chemins de câbles.

Des perforations 8 sont réalisées sur chaque tronçon 2, 3, par exemple par poinçonnage, et sont régulièrement réparties sur le fond 4, 5 et les ailes 6, 7 de chaque tronçon 2, 3. Les perforations 8 sont avantageusement de forme oblongue suivant la direction longitudinale. En variante, les perforations 8 peuvent être oblongues dans une direction transversale ou dans une direction intermédiaire, les tronçons 2, 3 pouvant comporter une combinaison de tout type de perforations 8.

La paire de tronçons 2, 3 comprend un premier tronçon 2, appelé petit tronçon, présentant des dimensions inférieures à celle du deuxième tronçon 3, appelé grand tronçon.

Plus précisément, la largeur du petit tronçon 2, mesurée entre les faces 9 extérieures des ailes 6, est inférieure à la largeur du grand tronçon 3, mesurée entre les faces 10 intérieures des ailes 7. En outre, la hauteur des ailes 6 du petit tronçon 2, mesurée depuis le fond du petit tronçon 2 jusqu'à l'extrémité 11 libre, est inférieure à la hauteur des ailes 7 du grand tronçon 3. Ainsi, le petit tronçon 2 peut être placé et peut glisser à l'intérieur du grand tronçon 3.

Les tronçons 2, 3 comprennent des moyens de guidage du glissement du petit tronçon 2 dans le grand tronçon 3. A cet effet, l'extrémité 11 libre de chaque aile 6 du petit tronçon 3 est prolongée par une portion 12 repliée, rabattue contre la face 13 intérieure de l'aile 6 du petit tronçon 2, de sorte que l'extrémité 11 libre de l'aile du petit tronçon est arrondie par le pli. De plus, l'extrémité 14 libre de chaque aile 7 du grand tronçon 3 est prolongée par une portion 15 pliée, dirigée vers l'intérieure du grand tronçon 3, sans rejoindre l'aile 7 du grand tronçon 3, formant boucle.

Ainsi, l'extrémité 11 libre de chaque aile 6 du petit tronçon 2 est insérée dans une boucle 15 sur une aile 7 du grand tronçon 3, de sorte que le petit tronçon 2 peut glisser dans le grand tronçon 3 suivant la direction longitudinale.

On prendra soin, pour des raisons qui seront exposées plus loin, de choisir les dimensions des tronçons 2, 3 de telle manière qu'un espacement vertical entre les deux tronçons 2, 3 existe.

Les portions 12, 15 pliées sur les ailes 6, 7 des tronçons 2, 3 permettent à un opérateur manipulant les tronçons 2, 3 de ne pas se blesser sur les bords des ailes 6, 7 qui peuvent être bruts, et donc coupant.

De plus, la portion 12, 15 repliée des ailes du petit tronçon 2 et l'espacement vertical assurent un glissement aisé du petit tronçon 2 dans le grand tronçon 3, en diminuant les frottements que pourraient causer un bord brut d'une aile 6 du petit tronçon 2 dans une boucle 15 du grand tronçon 3.

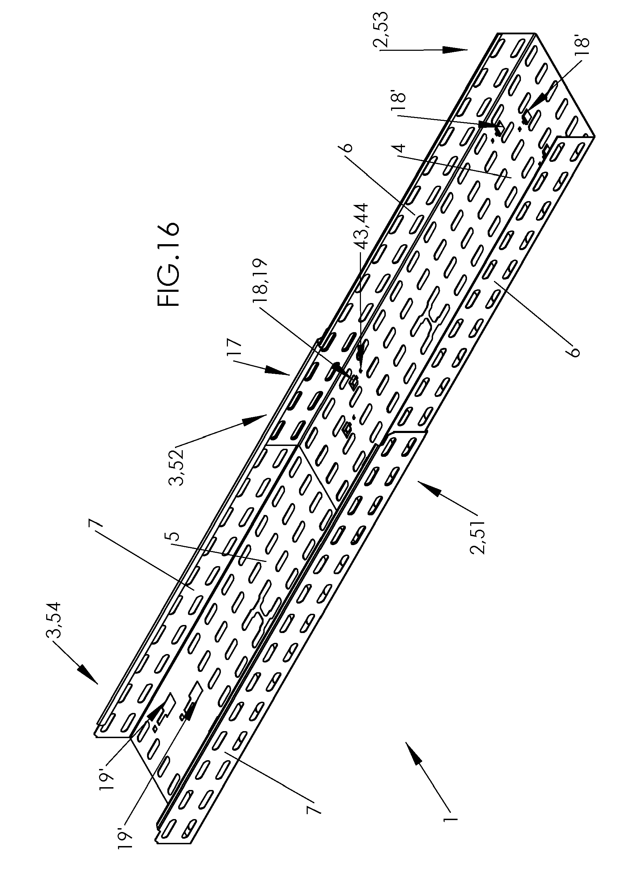

La paire de tronçons 2, 3 du chemin 1 de câbles peuvent alors prendre deux positions :
- une position pliée (figure 1), dans laquelle le petit tronçon 2 est rentré sur la plus grande partie de sa longueur dans le grand tronçon 3. En pratique, on laissera une partie 16, d'une longueur de quelques centimètres, du petit tronçon 2 dépassant au-delà du grand tronçon 3, afin de permettre à un opérateur de tirer sur le petit tronçon 3 aisément ;
- une position déployée (figure 16), dans laquelle le petit tronçon 2 est sorti sur la plus grande partie de sa longueur du grand tronçon 3. En pratique, une partie 17 de quelques centimètres de longueur du petit tronçon 3 reste dans le grand tronçon 2, afin de permettre le verrouillage des deux tronçons 2, 3 en position déployée.

Dans ce qui suit, on désignera par « avant » le sens suivant la direction longitudinale dans lequel un opérateur tirant sur la partie 16 du petit tronçon 2 qui dépasse du grand tronçon 3 fait glisser le petit tronçon 2. « arrière » désignera le sens opposé.

Les tronçons 2, 3 du chemin 1 de câbles peuvent passer de la position pliée à la position déployée, et inversement, par translation suivant la direction longitudinale du petit tronçon 2 sur le grand tronçon 3 grâce aux portions 12 repliées des ailes 6 du petit tronçon 2 logées dans les boucles 15 des ailes 7 du grand tronçon 3.

Le chemin 1 de câbles comprend en outre des moyens de verrouillage des tronçons 2, 3 dans la position déployée.

Les moyens de verrouillage comprennent une agrafe 18 en saillie sur une paroi du petit tronçon 2 et une ouverture 19 pratiquée dans une paroi du grand tronçon 3. La paroi du petit tronçon 2 portant l'agrafe 18 est en regard de la paroi du grand tronçon 3 portant l'ouverture 19.

Dans ce qui suit, la paroi des tronçons 2, 3 portant les moyens de verrouillage est le fond 4, 5 des tronçons 2, 3. Ces moyens pourront toutefois indifféremment être portés par une aile 6, 7 de chaque tronçon 2, 3, les deux ailes 6, 7, ou les ailes 6, 7 et le fond 4, 5 en même temps.

Les moyens de verrouillage définissent un axe A de référence, parallèle à la direction longitudinale.

Dans ce qui suit, on qualifiera de « supérieur » un même côté de l'axe A de référence, et d'« inférieur » l'autre côté de l'axe A de référence.

On va maintenant décrire l'agrafe 18.

L'agrafe 18 vue de dessus présente deux portions :
- une petite portion 20, définie entre deux bords 21, 22 de part et d'autre de l'axe A de référence, à savoir un bord 21 supérieur et un bord 22 inférieur ;
- une grande portion 23, définie entre deux bords 24, 25 de part et d'autre de l'axe A de référence, à savoir un bord 24 supérieur et un bord 25 inférieur, de sorte que de chaque côté de l'axe A de référence, la distance entre le bord 24, 25 de la grande portion 23 et l'axe A de référence est supérieure à la distance entre du bord 21, 22 de la petite portion 20 à l'axe A de référence. Plus précisément, la distance entre le bord 24 supérieur de la grande portion 23 et l'axe A de référence est supérieure à la distance entre le bord 21 supérieur de la petite portion 20 et l'axe A de référence. De même, la distance entre le bord 25 inférieur de la grande portion 23 et l'axe A de référence est supérieure à la distance entre le bord 22 inférieur de la petite portion 20 et l'axe A de référence.

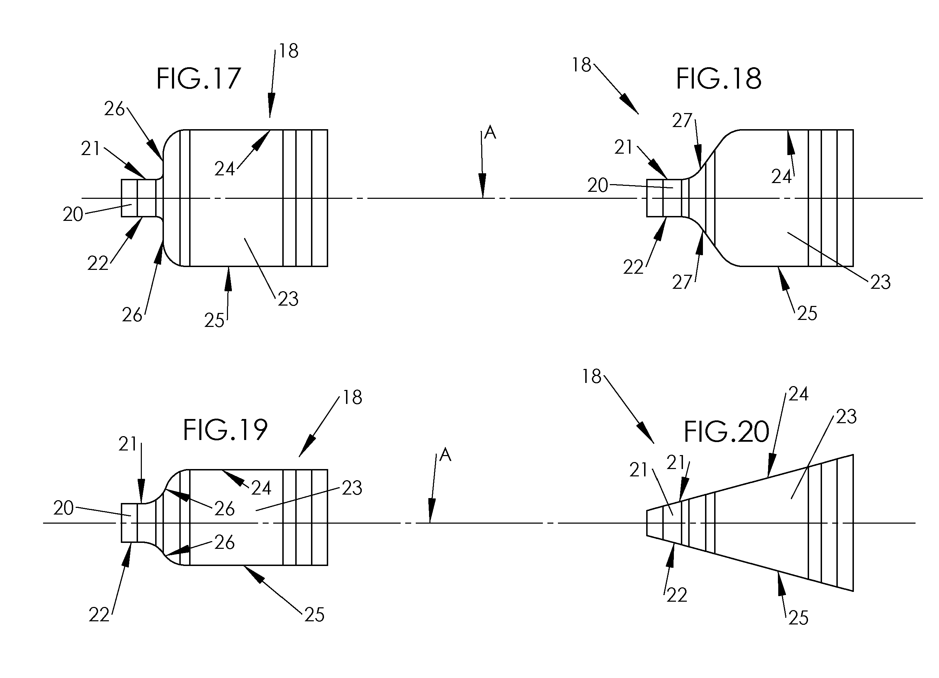

Les figures 17 à 20 illustrent quatre exemples non limitatifs de forme de l'agrafe 18.

Selon le mode de réalisation préféré (figure 17), les bords 21, 22 de la petite portion 20 et les bords 24, 25 de la grande portion 23 sont parallèles et équidistants à l'axe A de référence. Chaque bord 21, 22 de la petite portion 20, respectivement le bord 21 supérieur et le bord 22 inférieur, est relié à un bord 24, 25 de la grande portion 23, respectivement le bord 24 supérieur et le bord 25 inférieur, par un bord transversal, de manière à former de part et d'autre de l'axe de référence un décrochement 26 à la jonction entre les deux portions 20, 23.

Selon un deuxième mode de réalisation (figure 18), chaque bord 21, 22 de la petite portion 20, respectivement le bord 21 supérieur et le bord 22 inférieur, est relié à un bord 24, 25 de la grande portion 23, respectivement le bord 24 supérieur et le bord 25 inférieur, par un bord 27 incliné.

Selon un troisième mode de réalisation (figure 19), les bords 24, 25 de la grande portion 23 ne sont pas équidistants de l'axe A de référence.

Selon un quatrième mode de réalisation (figure 20), les bords 21, 22 de la petite portion 20 sont prolongés de manière continue par les bords 24, 25 de la grande portion 23. Les bords 21, 22 de la petite portion 20 et de la grande portion 23 sont inclinés par rapport à l'axe de référence A, en se rapprochant de l'axe A de référence dans la direction de la petite portion 20. L'agrafe 18 présente alors une forme triangulaire ou triangulaire tronquée.

On prendra soin d'orienter l'agrafe 18 sur le petit tronçon 2 de sorte que la petite portion 20 se trouve à l'avant de la grande portion 23.

L'agrafe 18 est en saillie sur la paroi du petit tronçon 2, de manière à définir avec ladite paroi une distance inférieure ou égale à l'épaisseur de la paroi du grand tronçon 3.

Plus précisément, d'après l'exemple décrit, l'agrafe 18 est écartée de la face 28 extérieure du fond 4 du petit 2 tronçon, par exemple par poinçonnage ou par emboutissage.

Ainsi, l'agrafe 18 comprend-elle une première section 29 inclinée s'éloignant du fond 4, une section 30 intermédiaire définissant une distance avec la face 28 extérieure du fond 4 du petit tronçon 2 sensiblement égale à l'épaisseur du fond 5 du grand tronçon 3, et une deuxième section 31 inclinée rejoignant le fond 4.

Selon un premier mode de réalisation, la section 30 intermédiaire est parallèle au fond 4 du petit tronçon 2.

Selon le mode préféré de réalisation, la section 30 intermédiaire comprend deux segments 32, 33 inclinés par rapport à l'axe du tronçon. Par conséquent, l'agrafe 18 présente successivement, suivant la direction longitudinale :
- la première section 29 inclinée s'écartant de la face 28 extérieure du fond 4 du petit tronçon 2,
- un premier congé 34 prolongeant la première section 29,
- le premier segment 32 de la section 30 intermédiaire qui, partant du premier congé 34, se rapproche de la face 28 extérieure du fond 4 du petit tronçon 2,
- un deuxième congé 35 prolongeant le premier segment 32 de la section 30 intermédiaire,
- le deuxième segment 33 de la portion 30 intermédiaire qui, partant du deuxième congé 35, s'éloigne de la face 28 extérieure du fond 4 du petit tronçon 2,
- un troisième congé 36 prolongeant le deuxième segment 33 de la portion 30 intermédiaire,
- la deuxième section 31 inclinée rejoignant la face 28 extérieure du fond 4 du petit tronçon 2.

Le deuxième congé 35, à la jonction entre les deux segments 32, 33 de la portion 30 intermédiaire de l'agrafe 18, est à une distance de la face 28 extérieure du fond 4 du petit tronçon 2 sensiblement égale à l'épaisseur du fond 5 du grand tronçon 3.

Les congés 34, 35, 36 forment des amorces d'articulation qui, comme il sera vu plus loin, favorisent la déformation de l'agrafe 18.

L'agrafe comprend ainsi avantageusement une portion 30 intermédiaire déformable élastiquement, formée de deux segments 32, 33 inclinés par rapport à la paroi du premier tronçon et reliés entre eux par un congé 35, ledit congé 35 définissant avec la paroi du premier tronçon 2 une distance inférieure ou égale à l'épaisseur de la paroi du deuxième tronçon 3.

De préférence, la grande portion 23 de l'agrafe 18 est formée par la première section 29 inclinée, le premier congé 34 et la section 30 intermédiaire, la petite portion 20 étant formée par le troisième 36 congé et la deuxième section 31 inclinée.

On va maintenant décrire l'ouverture 19 du grand tronçon 3.

L'ouverture 19 comporte deux portions, à savoir :
- une petite portion 37 définie entre deux bords 38, 39 de part et d'autre de l'axe A de référence, à savoir un bord 38 supérieur et un bord 39 inférieur, de sorte que de chaque côté de l'axe A de référence, la distance entre le bord 38, 39 de la petite portion 37 de l'ouverture 19 et l'axe A de référence d'une part est supérieure à la distance entre le bord 38, 39 de la petite portion 20 de l'agrafe 18 et l'axe A de référence et d'autre part est inférieure à la distance entre le bord 24, 25 de la grande portion 23 de l'agrafe 18 et l'axe A de référence. Plus précisément, la distance entre le bord 38 supérieur de la petite portion 37 de l'ouverture 19 et l'axe A de référence est supérieure à la distance entre le bord 21 supérieur de la petite portion 20 de l'agrafe 18 et l'axe A de référence et est inférieure à la distance entre le bord 24 supérieur de la grande portion 23 de l'agrafe 18 et l'axe A de référence. De même, la distance entre le bord 39 inférieur de la petite portion 37 de l'ouverture 19 et l'axe A de référence est supérieure à la distance entre le bord 22 inférieur de la petite portion 20 de l'agrafe 18 et l'axe A de référence et est inférieure à la distance entre le bord 25 inférieur de la grande portion 23 de l'agrafe 18 et l'axe A de référence
- une grande portion 40 définie entre deux bords 41 , 42 de part et d'autre de l'axe de référence, à savoir un bord 41 supérieur et un bord 42 inférieur, de sorte que de chaque côté de l'axe A de référence, la distance entre le bord 41, 42 de la grande portion 40 de l'ouverture 19 et l'axe A de référence est supérieure à la distance entre le bord 24, 25 de la grande portion 23 de l'agrafe 18 et l'axe A de référence. Plus précisément, la distance entre le bord 41 supérieur de la grande portion 40 de l'ouverture 19 et l'axe A de référence est supérieure à la distance entre le bord supérieur 24 de la grande portion 23 de l'agrafe 19 et l'axe A de référence. De même, la distance entre le bord 42 inférieur de la grande portion 40 de l'ouverture 19 et l'axe A de référence est supérieure à la distance entre le bord 25 inférieur de la grande portion 23 de l'agrafe 18 et l'axe A de référence.

De même que pour l'agrafe 18, l'ouverture 19 est orientée de sorte que la petite portion 37 est dirigée vers l'avant de la grande portion 40.

La longueur de grande portion 40 de l'ouverture 19 est supérieure à la longueur de la grande portion 23 de l'agrafe 18. Selon le mode de réalisation préféré, la longueur de la grande portion 40 de l'ouverture 19 est supérieure à la longueur totale de l'agrafe 18. De même, la longueur de la petite portion 37 de l'ouverture 19 est supérieure à la longueur de la petite portion 20 de l'agrafe 18.

Selon le mode préféré de réalisation, les moyens de verrouillage comprennent en outre une languette 43 de blocage en saillie sur la paroi du petit tronçon 2 et une fenêtre 44 pratiquée dans la paroi du grand tronçon 3.

Plus précisément, la languette 43 s'étend longitudinalement entre une extrémité 45 avant solidaire du fond 4 du petit tronçon 2 et une extrémité 46 libre arrière à distance du fond 4 du petit tronçon 2. La languette 43 est placée en avant de l'agrafe 18, de sorte que son extrémité 46 arrière libre est dirigée vers la petite portion 20 de l'agrafe 18.

La fenêtre 44 est placée du côté avant de l'ouverture 18 et présente des dimensions supérieures à celles de la languette 43, de sorte que la languette 43 peut s'étendre dans la fenêtre 44 lorsque l'agrafe 18 est dans l'ouverture 19.

Les moyens de verrouillage sont mis en oeuvre de la manière suivante.

Le chemin 1 de câbles est en position pliée : le petit tronçon 2 est placé dans le grand tronçon 3, de sorte que l'agrafe 18 est en appui sur la paroi du grand tronçon 3.

Plus précisément, selon le mode de réalisation préféré, le premier 34 congé est en contact avec la face 47 intérieure du fond 5 du grand tronçon 3.

Un opérateur tire par exemple vers l'avant sur la partie 16 du petit tronçon 2 dépassant du grand tronçon 3, de sorte que le petit tronçon 2 glisse suivant la direction longitudinale. On comprend que les effets seraient les mêmes si l'opérateur tirait vers l'arrière sur le grand tronçon 3.

La languette 43 puis l'agrafe 18 sont alors amenées en vis-à-vis de l'ouverture 19 du grand tronçon 3, dans laquelle elles s'insèrent, et la face 28 extérieure du fond 4 du petit tronçon 2 vient en contact avec la face 47 intérieure du fond 5 du grand tronçon 3.

L'opérateur continue de tirer sur le petit tronçon 2. La petite portion 20 de l'agrafe 18 glisse dans la petite portion 37 de l'ouverture 19, la grande portion 23 de l'agrafe 18 s'étendant dans la grande portion 40 de l'ouverture 19. Puis, la grande portion 23 de l'agrafe 18 vient se placer en regard de la petite portion 37 de l'ouverture 19, de sorte que le fond 5 du grand tronçon 3 se retrouve coincer entre le fond 4 du petit tronçon 2 et la grande portion 23 de l'agrafe 18.

Plus précisément, selon le mode de réalisation préféré, la face 48 extérieure du fond 5 du grand tronçon 3 se retrouve face au deuxième 35 congé de l'agrafe 18.

La distance entre le deuxième congé 35 de l'agrafe 18 et la face 28 extérieure du fond 4 du petit tronçon 2 peut être supérieure, de préférence très légèrement supérieure, par exemple de 0,1 mm, à l'épaisseur du fond 5 du grand tronçon 3, de sorte que le fond 5 du grand tronçon 3 peut s'étendre entre l'agrafe 18 et le fond 4 du petit tronçon 2 sans se déformer.

En variante, la distance entre le deuxième congé 35 et la face 28 extérieure du fond 4 du petit tronçon 2 est inférieure à l'épaisseur du fond 5 du grand tronçon 3. L'agrafe 18 se déforme donc par élasticité pour permettre le passage du fond 5 du grand tronçon 3 entre le deuxième congé 35 et la face 28 extérieure du fond 4 du petit tronçon 2. La déformation de l'agrafe 18 est facilitée grâce à la présence des congés 34, 35, 36. En effet, le fond 5 du grand tronçon 3 tend à écarter le deuxième congé 35 du fond 4 du petit tronçon 2, de sorte que le deuxième congé 35 tend à s'aplanir. Le premier segment 32 et le deuxième segment 33 de la section 30 intermédiaire de l'agrafe 18 tendent donc à s'aligner l'un avec l'autre, en pivotant respectivement autour du premier congé 34 et du troisième congé 36. L'élasticité de l'agrafe 18 maintient ainsi le fond 5 du grand tronçon 3 en contact sur sa face 47 intérieure avec la face 28 extérieure du fond 4 du petit tronçon 2 et sur sa face 48 extérieure avec le deuxième congé 35 de l'agrafe.

Tout mouvement du grand tronçon 3 par rapport au petit tronçon 2 est alors bloqué suivant la direction verticale.

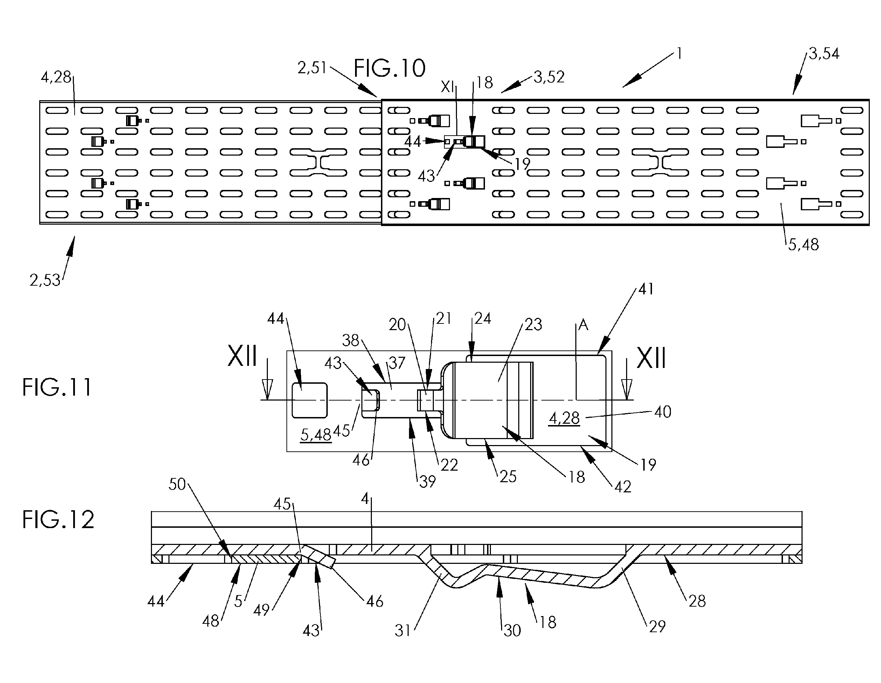

A ce stade, la languette 43 est en butée contre le fond 49 avant de la petite portion 37 de l'ouverture 19 (figures 10 à 12). En continuant de tirer sur le petit tronçon 2, la languette 43 sort de l'ouverture 19 et vient se loger dans la fenêtre 44 du grand tronçon 3.

Selon un premier mode de réalisation, la languette 43 se déforme en se rabattant contre le fond 4 du petit tronçon 2 pour sortir de l'ouverture 19. Le petit tronçon 2 en continuant de glisser sur le grand tronçon 3 est alors amené dans une position telle que la languette 43 se place dans la fenêtre 44 en reprenant sa position initiale, c'est-à-dire à distance du fond 4 du petit tronçon 2, par élasticité.

Selon un deuxième mode de réalisation, la languette 43 ne se déforme pas, mais c'est l'agrafe 18 qui se déforme pour faire sortir la languette 43 de l'ouverture 19. Plus précisément, la languette 43 inclinée glisse sur le fond 4 du grand tronçon 3, la face 28 extérieure du fond 4 du petit tronçon 2 s'écartant de la face 47 intérieure du fond du grand tronçon 3. Ceci est permis grâce aux dimensions des tronçons 2, 3, et à l'espacement vertical autorisant un mouvement relatif vertical, et à l'agrafe 18 qui se déforme grâce aux congés 34, 35, 36, comme il a déjà été décrit plus haut.

Lorsque la languette 43 arrive face à la fenêtre 44 sur le grand tronçon 3, la languette 43 s'insère dans la fenêtre 44, la face 28 extérieure du fond 4 du petit tronçon 2 revient en contact avec la face 47 intérieure du fond 5 du grand tronçon 3, et l'agrafe 18 reprend sa position initiale par élasticité. Parallèlement, l'agrafe 18 vient en butée dans l'ouverture 19. Plus précisément, la première section 29 inclinée de l'agrafe 18 vient en butée à la jonction entre la petite portion 37 et la grande portion 40 de l'ouverture 19, la deuxième section 31 inclinée l'agrafe 18 pouvant alors également être en butée contre le fond 49 avant de la petite portion 37 de l'ouverture 19.

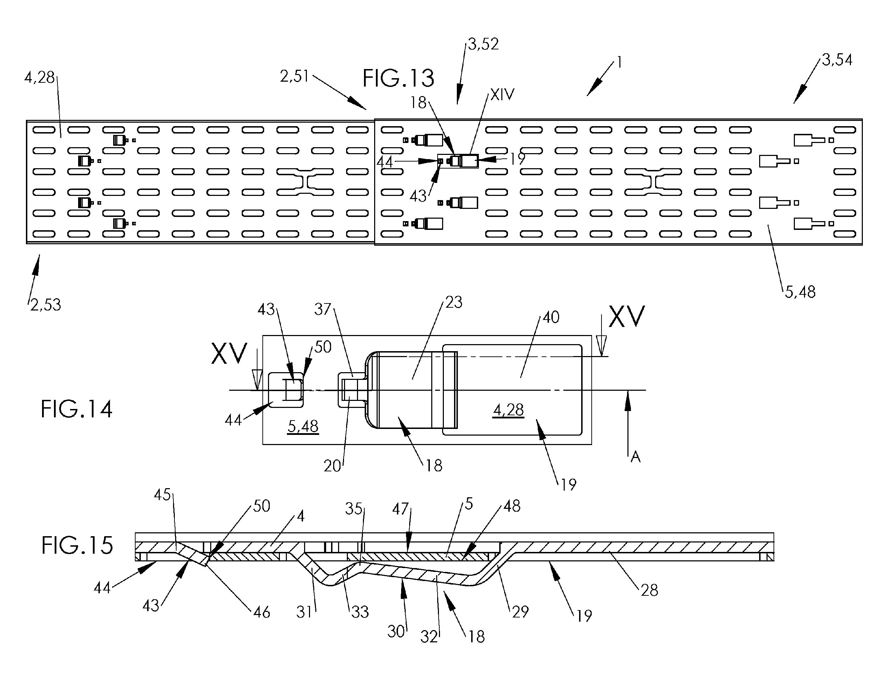

Ainsi, tout mouvement suivant la direction longitudinale entre les deux tronçons 2, 3 est bloqué. En effet, d'une part l'extrémité 46 arrière libre de la languette 43 en butée contre un fond 50 arrière de la fenêtre 44 empêche tout mouvement vers l'arrière, et d'autre part la première section 29 inclinée de l'agrafe 18 en butée contre l'ouverture à la jonction entre la petite portion 37 et la grande portion 40 ainsi que la deuxième section 31 inclinée de l'agrafe 18 en butée contre le fond 48 avant de la petite portion 37 de l'ouverture 19 empêche tout mouvement vers l'avant (figures 13 à 15).

Les deux tronçons 2, 3 du chemin 1 de câbles sont alors bloqués en position déployée.

En pratique, on laissera un jeu de quelques millimètres pour la butée de la languette 43 dans la fenêtre 44 et pour la butée de l'agrafe 18 dans l'ouverture 19, de manière à autoriser un léger glissement longitudinal entre les deux tronçons 2, 3 en position déployée, afin de permettre par exemple d'ajuster les ouvertures 8 oblongues des deux tronçons 2, 3.

De préférence, l'agrafe 18 et la languette 43 sont placées sur une portion 51 extrême arrière du petit tronçon 2, et l'ouverture 19 et la fenêtre 44 sont placées sur une portion 52 extrême avant du grand tronçon 3.

De préférence, le système de verrouillage met en oeuvre simultanément plusieurs agrafes 18 et languettes 43 sur le petit tronçon 2 et plusieurs ouvertures 19 et fenêtres 44 sur le grand tronçon 3. Les agrafes 18 et languettes 43 ainsi que les ouvertures 19 et fenêtres 44 correspondantes sont avantageusement réparties régulièrement sur la longueur des tronçons 2, 3, de sorte qu'il est possible de régler la longueur sur laquelle le petit tronçon 2 est sorti du grand tronçon 3 en position déployée, en choisissant la ou les agrafes 18 à mettre en oeuvre pour le verrouillage.

On a ici décrit le verrouillage d'une première paire de tronçons 2, 3. Il est bien entendu possible d'utiliser le système de verrouillage pour verrouiller une deuxième paire de tronçons 2, 3 télescopiques sur la première paire.

A cet effet, des moyens de verrouillage inversés sont mis en oeuvre. En effet, le petit tronçon 2 de la première paire comporte au moins une agrafe 18' inversée, image miroir de l'agrafe 18, présentant comme précédemment une petite portion 20' et une grande portion 23', et une languette 43' inversée sur une portion 53 extrême avant, orientées de telle sorte que la petite portion 20' de l'agrafe 18' inversée est dirigée vers l'arrière de la première paire de tronçons 2, 3 et que l'extrémité 46' libre de la languette 43' inversée est dirigée vers l'avant de la première paire de tronçons 2, 3, tandis que le grand tronçon 3 de la deuxième paire comporte une ouverture 19' inversée et une fenêtre 44' correspondantes sur une portion 54 extrême arrière, de telle sorte que la petite portion 37' de l'ouverture 19' inversée est dirigée vers l'arrière de la deuxième paire de tronçons 2, 3.

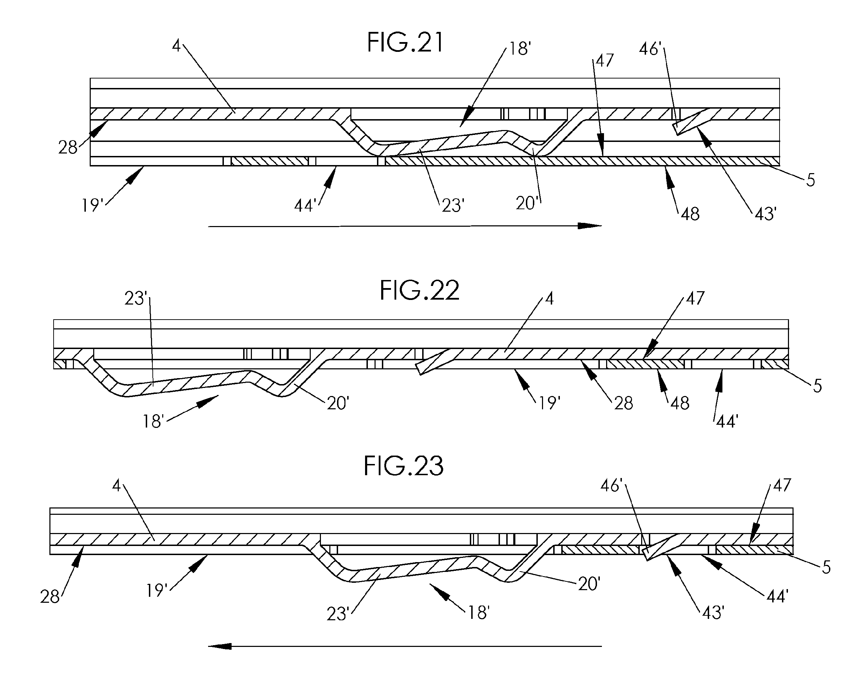

Ainsi, par exemple, le grand tronçon 3 de la deuxième paire est-il amené sur le petit tronçon 2 de la première paire, l'agrafe 18' inversée sur la portion 53 extrême avant du petit tronçon 2 de la première paire glissant sur la face intérieure 47 du fond 5 du grand tronçon 3 de la deuxième paire suivant la direction de la flèche de la figure 21 et les ailes 6 du petit tronçon 2 de la première paire étant insérées dans les boucles 15 des ailes 7 du grand tronçon 3 de la deuxième paire. Cette insertion est autorisée grâce à l'espacement vertical entre les petits tronçons 2 et les grands tronçons 3. Puis, en tirant sur le petit tronçon 2 de la première paire suivant la direction de la flèche de la figure 23, les moyens de verrouillage sont mis en oeuvre comme décrit précédemment pour verrouiller le petit tronçon 2 de la première paire sur le grand tronçon 3 de la deuxième paire.

Il est ainsi possible de verrouiller successivement plusieurs paires de tronçons 2, 3 télescopiques aboutées.

En outre, le verrouillage se fait automatiquement, par un simple glissement relatif des tronçons 2, 3 de chemins de câbles.

Le verrouillage ainsi créé a pour vocation d'être permanent. En effet, une fois que la languette 43 est insérée dans la fenêtre 44, les deux tronçons 2, 3 ne peuvent plus glisser l'un par rapport à l'autre pour être désassemblés.

Toutefois, les tronçons 2, 3 de chemins de câbles peuvent être désassemblés. Par exemple, la languette 43 peut être rabattue vers le fond 4 du petit tronçon 2, de manière à autoriser le glissement relatif des tronçons 2, 3 dans une direction. Le fond du petit tronçon 2 peut également être écarté du fond 5 du grand tronçon 3 par déformation de l'agrafe 18, de manière à placer la languette 43 entre la face 47 intérieure du fond 5 du grand tronçon 3 et la face 28 extérieure du fond 4 du petit tronçon 2 et à autoriser le glissement relatif des tronçons 2, 3 dans une direction.

En pratique, pour désassembler les deux tronçons 2, 3, il conviendra d'utiliser des outils pour rabattre la languette 43 et déformer l'agrafe 18.

Les tronçons 2, 3 de chemin de câbles sont amenés par paire, en position pliée, remplaçant un seul tronçon de longueur supérieure, sur le lieu où ils doivent être montés, de manière à diminuer l'encombrement à la fois lors du stockage et lors du transport.

Un seul opérateur suffit à monter le chemin 1 de câbles. En effet, que ce soit pour déployer deux tronçons 2, 3 télescopiques ou pour assembler deux paires successives de tronçons 2, 3 télescopiques, un seul tronçon 2, 3 à la fois est manipulé. En outre, les moyens de verrouillage ne nécessitent ni outils, ni accessoires.

Les moyens de verrouillage sont formés directement sur les tronçons 2, 3, de sorte qu'il n'est pas nécessaire de stocker de pièces supplémentaires, et les coûts de fabrication sont diminués.

Les moyens de verrouillage assurent une liaison résistante aux contraintes dynamiques, et notamment aux contraintes sismiques.

Les moyens de verrouillage permettent de solidariser les tronçons 2,3 dans n'importe quelle position, c'est-à-dire aussi bien lorsque les tronçons 2, 3 sont dans une position verticale par rapport au sol que dans une position horizontale, et aussi bien lorsque l'ouverture des tronçons 2, 3 est dirigée vers le haut par rapport au sol que vers le bas.

Les moyens de verrouillage n'entravent pas l'utilisation d'autres accessoires, tels que des cornières de séparation, des colliers ou encore des couvercles.

## Revendications

1. Système de verrouillage de deux tronçons (**2, 3**) d'un chemin (**1**) de câbles, le système définissant un axe (**A**) de référence et comprenant une agrafe (**18**) en saillie sur une paroi d'un premier tronçon (**2**), ladite agrafe (**18**) présentant deux portions :
- une première portion (**20**), dite **petite portion**, définie entre deux bords (**21, 22**) de part et d'autre de l'axe (**A**) de référence,
- une deuxième portion (**23**), dite **grande portion**, définie entre deux bords (**24, 25**) de part et d'autre de l'axe (**A**) de référence, de sorte que de chaque côté de l'axe (**A**) de référence, la distance entre le bord (**24, 25**) de la grande portion (**23**) et l'axe (**A**) de référence est supérieure à la distance entre le bord (**21, 22**) de la petite portion (**20**) à l'axe (**A**) de référence ;
le système de verrouillage comprenant en outre une ouverture (**19**) pratiquée dans une paroi du deuxième tronçon (**3**), ladite ouverture présentant deux portions :
- une première portion (**37**), dite **petite portion**, définie entre deux bords (**38, 39**) de part et d'autre de l'axe (**A**) de référence, de sorte que de chaque côté de l'axe (**A**) de référence, la distance entre le bord (**38, 39**) de la petite portion (**37**) de l'ouverture (**19**) et l'axe (**A**) de référence d'une part est supérieure à la distance entre le bord (**21, 22**) de la petite portion (**20**) de l'agrafe **(18)** et l'axe (**A**) de référence et d'autre part est inférieure à la distance entre le bord (**24, 25**) de la grande portion (**23**) de l'agrafe (**18**) et l'axe (**A**) de référence ;
- une deuxième portion (**40**), dite grande portion, définie entre deux bords (**41, 42**) de part et d'autre de l'axe (**A**) de référence, de sorte que de chaque côté de l'axe (**A**) de référence, la distance entre le bord (**41, 42**) de la grande portion (**40**) de l'ouverture (**19**) et l'axe (**A**) de référence est supérieure à la distance entre le bord (**24, 25**) de la grande portion (**23**) de l'agrafe (**18**) et l'axe (**A**) de référence le premier tronçon (2) comprend, en outre, une languette (43) de blocage en saillie sur la paroi du premier tronçon (2) et dans lequel le deuxième tronçon (3) comprend une fenêtre (44) pratiquée dans la paroi du deuxième tronçon (3).

2. Système de verrouillage selon la revendication 1, dans lequel les bords (**21**, **22**, **24, 25**) de l'agrafe (**18**) sont équidistants de l'axe (**A**) de référence.

3. Système de verrouillage selon la revendication 1 ou 2, dans lequel les bords (**21**, **22, 24, 25**) de l'agrafe (**18**) sont parallèles à l'axe (**A**) de référence.

4. Système de verrouillage selon l'une des revendications 1 à 3, dans lequel l'agrafe (**18**) définit une distance avec la paroi du premier tronçon (**2**) sensiblement égale à l'épaisseur de la paroi du deuxième tronçon (**3**).

5. Système de verrouillage selon l'une des revendications 1 à 4, dans lequel l'agrafe (**18**) présente une première section (**29**) inclinée s'éloignant de la paroi du premier tronçon, une section (**30**) intermédiaire définissant une distance avec la paroi du premier tronçon (**2**) sensiblement égale à l'épaisseur de la paroi du grand tronçon (**3**) et une deuxième section (**31**) inclinée rejoignant la paroi du premier tronçon (**2**).

6. Système de verrouillage selon la revendication 5, dans lequel la section (**30**) intermédiaire de l'agrafe comprend deux segments (**32, 33**) inclinés par rapport à la paroi du premier tronçon (**2**).

7. Système de verrouillage selon la revendication 6, dans lequel l'agrafe (**18**) présente successivement :
- une première section (**29**) inclinée s'écartant de la paroi du premier tronçon **(2),**
- un premier congé (**34**) prolongeant la première section (**29**),
- un premier segment (**32**) de la section (**30**) intermédiaire qui, partant du premier congé (**34**), se rapproche de la paroi du premier tronçon (**2**),
- un deuxième congé (**35**) prolongeant le premier segment (**32**) de la section (**30**) intermédiaire,
- un deuxième segment (**33**) de la portion (**30**) intermédiaire qui, partant du deuxième congé (**35**), s'éloigne de la paroi du premier tronçon (**2**),
- un troisième congé (**36**) prolongeant le deuxième segment (**33**) de la portion (**30**) intermédiaire,
- une deuxième section (**31**) inclinée rejoignant la paroi du premier tronçon (**2**).

8. Chemin (1) de câbles comprenant deux tronçons, muni d'un système de verrouillage selon l'une des revendications 1 à 7.

9. Chemin (1) de câbles selon la revendication 8, dans lequel les tronçons (2, 3) sont télescopiques, et comprennent de moyens de guidage du glissement du premier tronçon (**2**) sur le deuxième tronçon (**3**).

## Patentansprüche

1. System zum Verriegeln von zwei Teilstücken (2, 3) eines Kabeltrogs (1), wobei das System eine Bezugsachse (A) definiert und einen von einer Wand eines ersten Teilstücks (2) vorstehenden Haken (18) aufweist, wobei der Haken (18) zwei Abschnitte aufweist:
- einen ersten Abschnitt (20), der kleiner Abschnitt genannt wird und zwischen zwei Rändern (21, 22) beiderseits der Bezugsachse (A) definiert ist,
- einen zweiten Abschnitt (23), der großer Abschnitt genannt wird und zwischen zwei Rändern (24, 25) beiderseits der Bezugsachse (A) definiert ist, derart, dass auf jeder Seite der Bezugsachse (A) der Abstand zwischen dem Rand (24, 25) des großen Abschnitts (23) und der Bezugsachse (A) größer ist als der Abstand zwischen dem Rand (21, 22) des kleinen Abschnitts (20) und der Bezugsachse (A);
wobei das Verriegelungssystem außerdem eine Öffnung (19) aufweist, die in einer Wand des zweiten Teilstücks (3) ausgespart ist, wobei die Öffnung zwei Abschnitte aufweist:
- einen ersten Abschnitt (37), der kleiner Abschnitt genannt wird und zwischen zwei Rändern (38, 39) beiderseits der Bezugsachse (A) definiert ist, derart, dass auf jeder Seite der Bezugsachse (A) der Abstand zwischen dem Rand (38, 39) des kleinen Abschnitts (37) der Öffnung (19) und der Bezugsachse (A) einerseits größer ist als der Abstand zwischen dem Rand (21, 22) des kleinen Abschnitts (20) des Hakens (18) und der Bezugsachse (A) und andererseits kleiner ist als der Abstand zwischen dem Rand (24, 25) des großen Abschnitts (23) des Hakens (18) und der Bezugsachse (A);
- einen zweiten Abschnitt (40), der großer Abschnitt genannt wird und zwischen zwei Rändern (41, 42) beiderseits der Bezugsachse (A) definiert ist, derart, dass auf jeder Seite der Bezugsachse (A) der Abstand zwischen dem Rand (41, 42) des großen Abschnitts (40) der Öffnung (19) und der Bezugsachse (A) größer ist als der Abstand zwischen dem Rand (24, 25) des großen Abschnitts (23) des Hakens (18) und der Bezugsachse (A);
wobei das erste Teilstück (2) außerdem eine Blockierlasche (43) umfasst, die von der Wand des ersten Teilstücks (1) vorsteht, und wobei das zweite Teilstück (3) ein Fenster (44) umfasst, das in der Wand des zweiten Teilstücks (3) ausgespart ist.

2. Verriegelungssystem nach Anspruch 1, wobei die Ränder (21, 22, 24, 25) des Hakens (18) von der Bezugsachse (A) gleich beabstandet sind.

3. Verriegelungssystem nach Anspruch 1 oder 2, wobei die Ränder (21, 22, 24, 25) des Hakens (18) zu der Bezugsachse (A) parallel sind.

4. Verriegelungssystem nach einem der Ansprüche 1 bis 3, wobei der Haken (18) einen Abstand zu der Wand des ersten Teilstücks (2) definiert, der im Wesentlichen gleich der Dicke der Wand des zweiten Teilstücks (3) ist.

5. Verriegelungssystem nach einem der Ansprüche 1 bis 4, wobei der Haken (18) einen ersten geneigten Bereich (29), der sich von der Wand des ersten Teilstücks entfernt, einen Zwischenbereich (30), der einen Abstand zu der Wand des ersten Teilstücks (2) definiert, der im Wesentlichen gleich der Dicke der Wand des großen Teilstücks (3) ist, und einen zweiten geneigten Bereich (31), der mit der Wand des ersten Teilstücks (2) verbunden ist, aufweist.

6. Verriegelungssystem nach Anspruch 5, wobei der Zwischenbereich des Hakens zwei Segmente (32, 33) umfasst, die in Bezug auf die Wand des ersten Teilstücks (2) geneigt sind.

7. Verriegelungssystem nach Anspruch 6, wobei der Haken (18) nacheinander Folgendes umfasst:
- einen ersten geneigten Bereich (29), der sich von der Wand des ersten Teilstücks (2) entfernt,
- eine erste Kehle (34), die den ersten Bereich (29) verlängert,
- ein erstes Segment (32) des Zwischenbereichs (30), das sich ausgehend von der ersten Kehle (34) der Wand des ersten Teilstücks (2) nähert,
- eine zweite Kehle (35), die das erste Segment (32) des Zwischenbereichs (30) verlängert,
- ein zweites Segment (33) des Zwischenbereichs (30), das sich ausgehend von der zweiten Kehle (35) von der Wand des ersten Teilstücks (2) entfernt,
- eine dritte Kehle (36), die das zweite Segment (33) des Zwischenbereichs (30) verlängert,
- einen zweiten geneigten Bereich (31), der mit der Wand des ersten Teilstücks (2) verbunden ist.

8. Kabeltrog (1), der zwei Teilstücke umfasst und mit einem Verriegelungssystem nach einem der Ansprüche 1 bis 7 versehen ist.

9. Kabeltrog (1) nach Anspruch 8, wobei die Teilstücke (2, 3) teleskopartig sind und Mittel zum Führen des Gleitens des ersten Teilstücks (2) an dem zweiten Teilstück (3) umfassen.

## Claims

1. System for locking two parts (2, 3) of a cable raceway (1), the system defining a reference axis (A) and comprising a clip (18) projecting from a wall of a first part (2), said clip (18) having two portions:
- a first portion (20), called the little portion, defined between two edges (21, 22) on either side of the reference axis (A),
- a second portion (23), called the large portion, defined between two edges (24, 25) on either side of the reference axis (A) such that, on either side of the reference axis (A), the distance between the edge (24, 25) of the large portion (23) and the reference axis (A) is greater than the distance between the edge (21, 22) of the little portion (20) and the reference axis (A);
the locking system further comprising an opening (19) created in a wall of the second part (3), said opening having two portions:
- a first portion (37), called the little portion, defined between two edges (38, 39) on either side of the reference axis (A) such that, on either side of the reference axis (A), the distance between the edge (38, 39) of the little portion (37) of the opening (19) and the reference axis (A) on one hand is greater than the distance between the edge (21, 22) of the little portion (20) of the clip (18) and the reference axis (A) and, on the other hand, is less than the distance between the edge (24, 25) of the large portion (23) of the clip (18) and the reference axis (A);
- a second portion (40), called the large portion, defined between two edges (41, 42) on either side of the reference axis (A) such that, on either side of the reference axis (A), the distance between the edge (41, 42) of the large portion (40) of the opening (19) and the reference axis (A) is greater than the distance between the edge (24, 25) of the large portion (23) of the clip (18) and the reference axis (A)
the first part (2) further comprises a blocking tab (43) projecting from the wall of the first part (2) and in which the second part (3) comprises a window (44) created in the wall of the second part (3).

2. Locking system according to Claim 1, in which the edges (21, 22, 24, 25) of the clip (18) are equidistant from the reference axis (A).

3. Locking system according to Claim 1 or 2, in which the edges (21, 22, 24, 25) of the clip (18) are parallel to the reference axis (A).

4. Locking system according to one of Claims 1 to 3, in which the clip (18) defines a distance, with respect to the wall of the first part (2), which is essentially equal to the thickness of the wall of the second part (3).

5. Locking system according to one of Claims 1 to 4, in which the clip (18) has a first inclined section (29) which points away from the wall of the first part, an intermediate section (30) defining a distance, with respect to the wall of the first part (2), which is essentially equal to the thickness of the wall of the large part (3), and a second inclined section (31) which meets the wall of the first part (2).

6. Locking system according to Claim 5, in which the intermediate section (30) of the clip comprises two segments (32, 33) which are inclined with respect to the wall of the first part (2).

7. Locking system according to Claim 6, in which the clip (18) has, in succession:
- a first inclined section (29) which points away from the wall of the first part (2),
- a first fillet (34) in the extension of the first section (29),
- a first segment (32) of the intermediate section (30) which, proceeding from the first fillet (34), points towards the wall of the first part (2),
- a second fillet (35) in the extension of the first segment (32) of the intermediate section (30),
- a second segment (33) of the intermediate section (30) which, proceeding from the second fillet (35) points away from the wall of the first part (2),
- a third fillet (36) in the extension of the second segment (33) of the intermediate section (30),
- a second inclined section (31) which meets the wall of the first part (2).

8. Cable raceway (1) comprising two parts, provided with a locking system according to one of Claims 1 to 7.

9. Cable raceway (1) according to Claim 8, in which the parts (2, 3) are telescopic and comprise means for guiding the sliding of the first part (2) over the second part (3).
